# EUROPEAN PATENT APPLICATION

(11) **EP 4 814 468 A1**
(43) Date of publication of application: **30.09.2026**
(21) Application number: 23959468.2
(22) Date of filing: 22.11.2023
(51) Int. Cl.: G01M 3/20, G01M 3/22

(54) **INSPECTION LIQUID SUPPLY DEVICE**

(71) Applicant: SMC Corporation, Tokyo 104-0031 (JP)
(72) Inventor: KAWAMURA, Youichi, Kashiwa-shi, Chiba 277-0871 (JP); OKUHIRA, Hiroyuki, Kashiwa-shi, Chiba 277-0871 (JP); YOSHIDA, Yasunori, Kashiwa-shi, Chiba 277-0871 (JP)
(74) Representative: Keil & Schaafhausen Patentanwälte PartGmbB
(86) International application number: PCT/JP2023/042031
(87) International publication number: WO 2025/109725

(57) **Abstract**

An inspection liquid supply device (10) is provided with: an introduction port (20) that introduces compressed air to the upstream of a mist supply unit (18) that supplies a mist-form inspection liquid; a discharge port (32) that allows the compressed air to flow out; a first flow path (26) that communicates with the discharge port (32); a second flow path (28) that is provided in parallel with the first flow path (26), communicates with the discharge port (32), and has a pressure intensifying valve (48) partway through the second flow path (28); and a first switching valve (24) that connects either the first flow path (26) or the second flow path (28) to the introduction port (20).

## Description

### TECHNICAL FIELD

The present invention relates to an inspection liquid supply device that supplies an inspection liquid in a mist form to an inspection target.

### BACKGROUND ART

A leak inspection for inspecting the presence or absence of a leak may be performed on a device required to have a certain degree of sealing property, a compressed air piping system of a factory, or the like. For such a leak inspection, an inspection device described in JP 2023-039662 A is used, for example. The inspection device disclosed in JP 2023-039662 A converts a colored inspection liquid into mist and supplies the mist to an inspection target together with compressed air.

### SUMMARY OF THE INVENTION

Since the leak inspection is performed only rarely, it is wasteful to always equip the inspection target with a leak inspection system. Meanwhile, there are various inspection conditions for the device or pipe to be inspected. For example, the pressure of the compressed air supplied to the device or the pipe needs to be changed between a case where no compressed air remains inside the device or pipe to be inspected and a case where the compressed air remains inside the device or pipe to be inspected. Therefore, a leak inspection device capable of coping with various inspection targets and inspection conditions is required.

The present invention has the object of solving the aforementioned problem.

An aspect of the following disclosure is characterized by an inspection liquid supply device comprising: an introduction port from which compressed air is introduced; a discharge port from which the compressed air flows out; a first flow path configured to communicate with the discharge port; a second flow path that is provided in parallel with the first flow path, is configured to communicate with the discharge port, and includes a pressure booster valve in a middle of the second flow path; a first switching valve configured to connect one of the first flow path or the second flow path to the introduction port; and a mist supply unit configured to supply an inspection liquid in a mist form to the compressed air discharged from the discharge port.

According to the inspection liquid supply device of the above aspect, in the case where the compressed air remains inside the inspection target, the inspection liquid in the mist form can be supplied to the inspection target by boosting the pressure of the compressed air through the second flow path and the pressure booster valve. In addition, according to the inspection liquid supply device, in the case where no compressed air remains inside the inspection target, the inspection liquid in the mist form can be supplied to the inspection target together with the compressed air at a sufficient flow rate by supplying the compressed air through the first flow path.

### BRIEF DESCRIPTION OF DRAWINGS

[FIG. 1] FIG. 1 is a fluid circuit diagram of an inspection liquid supply device according to an embodiment;
[FIG. 2] FIG. 2A is an external perspective view of a pressure supply unit in FIG. 1, and FIG. 2B is a perspective view showing the inside of the pressure supply unit in FIG. 1;
[FIG. 3] FIG. 3 is an explanatory view of an example in which the inspection liquid supply device in FIG. 1 is connected to a piping system serving as an example of an inspection target;
[FIG. 4] FIG. 4 is an explanatory view of an operation of the inspection liquid supply device in the case where there is no compressed air inside the inspection target;
[FIG. 5] FIG. 5 is an explanatory view of a pressure boosting operation of the inspection liquid supply device in the case where compressed air is present inside the inspection target;
[FIG. 6] FIG. 6 is a view explaining a flow of compressed air during an ON period in the pressure boosting operation of the inspection liquid supply device in FIG. 5;
[FIG. 7] FIG. 7 is a view explaining a flow of compressed air immediately after switching from the ON period to an OFF period in the pressure boosting operation of the inspection liquid supply device in FIG. 5; and
[FIG. 8] FIG. 8 is an explanatory view of an operation of the inspection liquid supply device when a portable small air compressor is connected to the inspection liquid supply device in the case where clean compressed air cannot be obtained.

### DETAILED DESCRIPTION OF THE INVENTION

An inspection liquid supply device 10 according to the present embodiment is portable and is used to supply an inspection liquid in a mist form together with compressed air at the time of a leak inspection. The inspection liquid supply device 10 facilitates visual identification of a leakage portion of an inspection target by staining the leakage portion with a coloring agent or a fluorescent agent contained in the inspection liquid. Hereinafter, the configuration of each part of the inspection liquid supply device 10 will be described. In the following description, the terms "upstream" and "downstream" are used, and these terms indicate the flow direction of compressed air in a steady operating state.

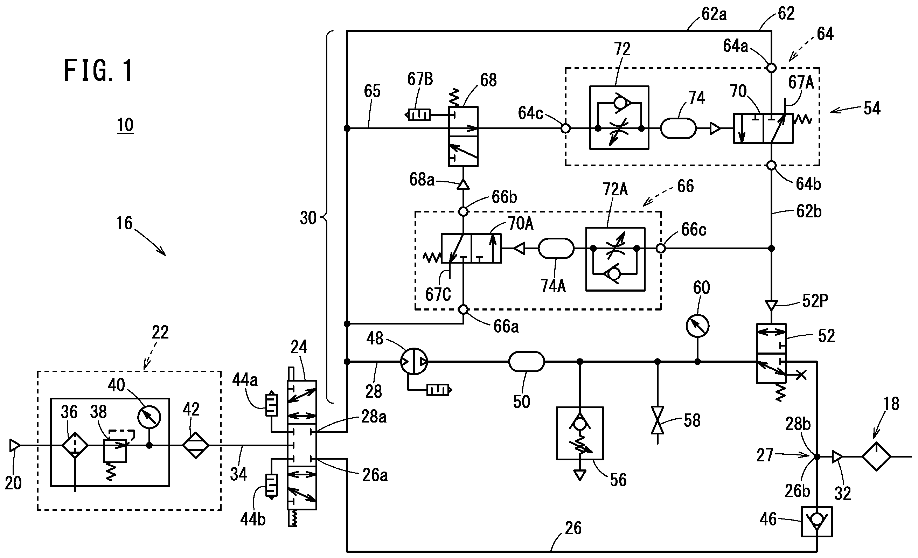

As shown in FIG. 1, the inspection liquid supply device 10 includes a pressure supply unit 16 and a mist supply unit 18. The pressure supply unit 16 mainly includes an introduction port 20, a filter unit 22, a first switching valve 24, a first flow path 26, a second flow path 28, a pressure booster circuit 30, and a discharge port 32. A supply source of compressed air is connected to the introduction port 20.

An introduction flow path 34 connects the introduction port 20 and the first switching valve 24. The filter unit 22 is provided in the middle of the introduction flow path 34. The filter unit 22 is a detachable member that is attached in the case where, for example, unclean compressed air is supplied to the introduction port 20. The unclean compressed air refers to compressed air that contains dust, moisture, and the like. A portable small air compressor can be connected to the introduction port 20.

The filter unit 22 includes a first filter 36, a pressure reducing valve 38, a first pressure gauge 40, and a dryer 42 in order from the upstream side. The first filter 36 removes dust from the introduced compressed air. The pressure reducing valve 38 decompresses the introduced compressed air to a predetermined pressure. The first pressure gauge 40 displays the pressure of the compressed air decompressed by the pressure reducing valve 38. The dryer 42 is, for example, a membrane filter having a hollow fiber membrane, and removes moisture (dew condensation water) in the compressed air.

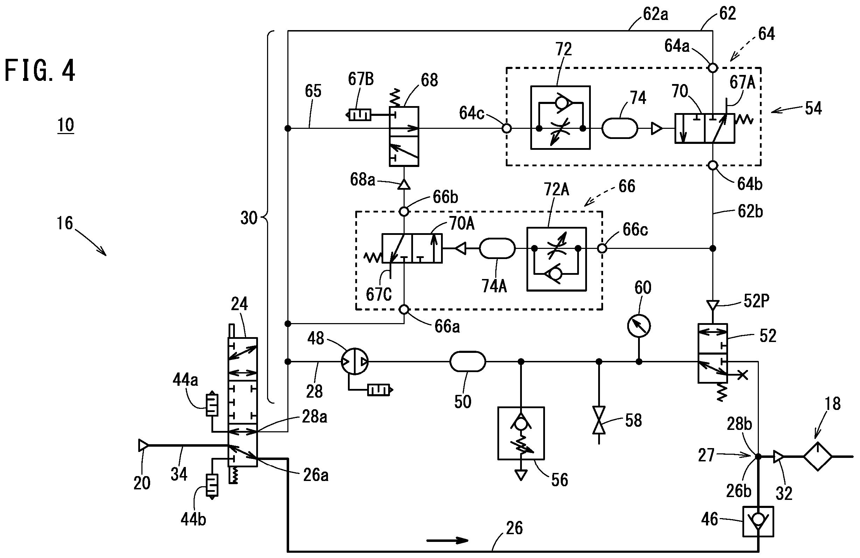

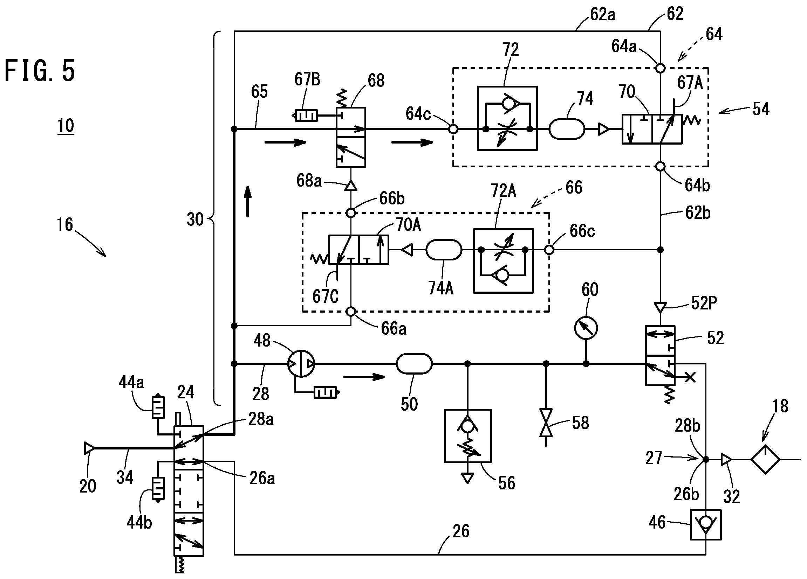

The first switching valve 24 is a manual switching type five port three position valve. The introduction flow path 34, a first exhaust portion 44a, a second exhaust portion 44b, the first flow path 26, and the second flow path 28 are connected to the respective ports of the first switching valve 24. The first switching valve 24 can be switched to three positions, namely, a closed position shown in FIG. 1, a direct pressure position shown in FIG. 4, and a pressure boosting position shown in FIG. 5. The first switching valve 24 closes each flow path at the closed position in FIG. 1.

At the direct pressure position in FIG. 4, the first switching valve 24 allows the introduction flow path 34 and the first flow path 26 to communicate with each other, and allows the second flow path 28 and the first exhaust portion 44a to communicate with each other. In addition, at the pressure boosting position in FIG. 5, the first switching valve 24 allows the introduction flow path 34 and the second flow path 28 to communicate with each other, and allows the first flow path 26 and the second exhaust portion 44b to communicate with each other.

The first flow path 26 has a first end portion 26a located on the upstream side and connected to the first switching valve 24, and a second end portion 26b located on the downstream side and joined to the second flow path 28 at a joint portion 27. The first flow path 26 communicates with the discharge port 32 via the joint portion 27 with the second flow path 28. The first flow path 26 is provided with a first check valve 46. The first check valve 46 is attached in a direction in which the compressed air flowing toward the second end portion 26b is allowed to pass through the first check valve 46. The first check valve 46 prevents the compressed air in the second flow path 28 from flowing backward toward the first end portion 26a of the first flow path 26 when a pressure boosting operation (see FIGS. 5 to 7) is performed. The first check valve 46 is preferably disposed near the joint portion 27 between the first flow path 26 and the second flow path 28.

The second flow path 28 is a flow path disposed in parallel with the first flow path 26. The second flow path 28 has a third end portion 28a located on the upstream side, and a fourth end portion 28b located on the downstream side. The third end portion 28a on the upstream side is connected to the first switching valve 24, and the fourth end portion 28b is connected to the joint portion 27. The pressure booster circuit 30 is provided in the middle of the second flow path 28.

The pressure booster circuit 30 includes, as main components, a pressure booster valve 48, a pressure accumulator tank 50, a second switching valve 52, and a timer circuit 54 (a first time delay valve 64 and a second time delay valve 66). The pressure booster valve 48 is provided in the middle of the second flow path 28. The pressure booster valve 48 boosts the pressure of a portion of the compressed air that flows in from the third end portion 28a of the second flow path 28 and causes the portion of the compressed air to be discharged toward the fourth end portion 28b. The pressure accumulator tank 50 is connected to the downstream side of the pressure booster valve 48. The pressure accumulator tank 50 stores compressed air whose pressure has been boosted by the pressure booster valve 48.

The second switching valve 52 is connected to the downstream side of the pressure accumulator tank 50. A spring check valve 56, a residual pressure exhaust valve 58, and a second pressure gauge 60 are connected to the second flow path 28 between the pressure accumulator tank 50 and the second switching valve 52. The spring check valve 56 causes the compressed air in the second flow path 28 to be discharged when the pressure exceeds a predetermined pressure, and prevents the pressure from excessively increasing. The residual pressure exhaust valve 58 is a gate valve that is operated by the operation of a user, and is used, for example, to discharge the compressed air stored in the pressure accumulator tank 50 after use. The second pressure gauge 60 displays the pressure of the compressed air stored in the pressure accumulator tank 50.

The second switching valve 52 is a three port two position valve, and is switched to an OFF position or an ON position by supply or discharge of pilot air. In an initial state of not being supplied with pilot air, the second switching valve 52 is located at the OFF position by a return spring (see FIG. 1), and closes the second flow path 28 located on the downstream side of the pressure accumulator tank 50. When supplied with the pilot air from the timer circuit 54, the second switching valve 52 is switched from the OFF position to the ON position. At the ON position, the second switching valve 52 allows the pressure accumulator tank 50 to communicate with the discharge port 32. Therefore, at the ON position, the second switching valve 52 causes the compressed air stored in the pressure accumulator tank 50 to be discharged from the discharge port 32.

The timer circuit 54 includes a pilot flow path 62 that branches off from the second flow path 28 on the upstream side of the pressure booster valve 48. The timer circuit 54 supplies pilot air to the second switching valve 52 via the pilot flow path 62 during an ON period. Further, the timer circuit 54 exhausts the pilot air in the second switching valve 52 during an OFF period. Specifically, the timer circuit 54 includes the first time delay valve 64, the second time delay valve 66, and a third switching valve 68.

The first time delay valve 64 is a valve for setting a period (OFF period) during which the compressed air in the pressure booster valve 48 is stored in the pressure accumulator tank 50. The second time delay valve 66 is a valve for setting a period (ON period) during which the compressed air is released from the pressure accumulator tank 50. The third switching valve 68 causes compressed air (driving air) for driving the first time delay valve 64 to be supplied thereto and discharged therefrom.

The first time delay valve 64 is disposed in the middle of the pilot flow path 62. The first time delay valve 64 includes a first inlet port 64a, a first supply/discharge port 64b, a first control port 64c, a fourth switching valve 70, a first throttle valve 72, and a first volume portion 74. A first portion 62a of the pilot flow path 62 is connected to the first inlet port 64a, and a second portion 62b of the pilot flow path 62 is connected to the first supply/discharge port 64b. Note that the first portion 62a is a portion of the pilot flow path 62 that is connected to the second flow path 28 on the upstream side of the pressure booster valve 48. Further, the second portion 62b is a portion of the pilot flow path 62 that is connected to a pilot port 52P of the second switching valve 52.

The fourth switching valve 70 is a three port two position valve driven by driving air (pilot air), and is connected to the first inlet port 64a, the first supply/discharge port 64b, and a third exhaust portion 67A. In an initial state of not being supplied with driving air, the fourth switching valve 70 is located at a closed position by the elastic force of a return spring. At the closed position, the fourth switching valve 70 closes the first inlet port 64a and allows the first supply/discharge port 64b to communicate with the third exhaust portion 67A. That is, the fourth switching valve 70 located at the closed position causes the pilot air in the second switching valve 52 to be discharged. The fourth switching valve 70 is displaced to an open position by receiving supply of the driving air. The fourth switching valve 70 located at the open position allows the first inlet port 64a and the first supply/discharge port 64b to communicate with each other, and causes the pilot air to be supplied to the second switching valve 52.

A first drive flow path 65 is connected to the first control port 64c via the third switching valve 68. Note that the first drive flow path 65 is a flow path that connects the third switching valve 68 and the first portion 62a of the pilot flow path 62. The first control port 64c causes the driving air to be supplied and discharged to and from the fourth switching valve 70. The first throttle valve 72 is disposed between the first control port 64c and the fourth switching valve 70. The first throttle valve 72 throttles the flow rate of the driving air flowing in from the first control port 64c. The first volume portion 74 is constituted by the volume of the flow path, the chamber, and the like between the first throttle valve 72 and the fourth switching valve 70. The first time delay valve 64 switches the fourth switching valve 70 to the open position after a first delay time set by the first throttle valve 72 has elapsed after the supply of the driving air from the third switching valve 68 is started. The first delay time substantially defines the length of the OFF period.

The third switching valve 68 is a three port two position valve that is switched by driving air supplied to a drive port 68a. The first drive flow path 65, the first control port 64c, and a fourth exhaust portion 67B are connected to the respective ports of the third switching valve 68. In an initial state of not being supplied with driving air, the third switching valve 68 is biased by a return spring and is located at a first position. At the first position, the third switching valve 68 allows the first drive flow path 65 and the first control port 64c to communicate with each other, and causes the driving air to be supplied to the first time delay valve 64. When supplied with the driving air, the third switching valve 68 is switched to a second position, and allows the fourth exhaust portion 67B and the first control port 64c to communicate with each other and closes the first drive flow path 65. That is, the third switching valve 68 located at the second position causes the driving air in the first time delay valve 64 to be exhausted.

The second time delay valve 66 is a component similar to the first time delay valve 64. The second time delay valve 66 includes a fifth switching valve 70A, a second throttle valve 72A, a second volume portion 74A, a second inlet port 66a, a second supply/discharge port 66b, and a second control port 66c. The second inlet port 66a is connected to the first portion 62a of the pilot flow path 62, the second supply/discharge port 66b is connected to the drive port 68a of the third switching valve 68, and the second control port 66c is connected to the second portion 62b of the pilot flow path 62.

The fifth switching valve 70A is a three port two position valve driven by driving air supplied thereto and discharged therefrom from the second control port 66c. The second inlet port 66a, the second supply/discharge port 66b, and a fifth exhaust portion 67C are connected to the fifth switching valve 70A. In an initial state of not being supplied with driving air, the fifth switching valve 70A is located at an initial position by the elastic force of a return spring. At the initial position, the fifth switching valve 70A closes the second inlet port 66a and allows the second supply/discharge port 66b to communicate with the fifth exhaust portion 67C. That is, the fifth switching valve 70A located at the initial position causes the driving air in the third switching valve 68 to be exhausted. The fifth switching valve 70A is displaced to an open position by receiving supply of the driving air. The fifth switching valve 70A located at the open position allows the second inlet port 66a and the second supply/discharge port 66b to communicate with each other, and causes the driving air (pilot air) to be supplied to the drive port 68a of the third switching valve 68 from the pilot flow path 62.

The second control port 66c communicates with the second portion 62b of the pilot flow path 62. The second control port 66c causes the driving air to be supplied and discharged to and from the fifth switching valve 70A. The second throttle valve 72A is disposed between the second control port 66c and the fifth switching valve 70A. The second throttle valve 72A throttles the flow rate of the driving air flowing in from the second control port 66c. The second volume portion 74A is constituted by the volume of the flow path, the chamber, and the like between the second throttle valve 72A and the fifth switching valve 70A. The second time delay valve 66 switches the fifth switching valve 70A to the open position after a second delay time set by the second throttle valve 72A has elapsed after the supply of the pilot air to the second portion 62b of the pilot flow path 62 is started. As a result, the third switching valve 68 is switched to the second position, the driving air in the first time delay valve 64 is discharged, the pilot air in the second switching valve 52 is discharged, and the period is shifted to the OFF period. Accordingly, the second delay time substantially defines the length of the ON period.

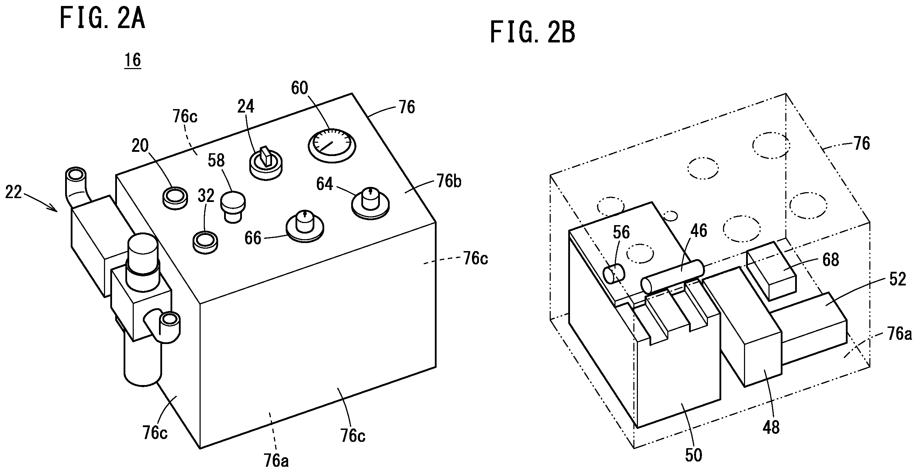

As shown in FIG. 2A, the pressure supply unit 16 further includes a box-shaped housing 76. The housing 76 is formed in a rectangular parallelepiped shape, and has a bottom surface 76a, a top surface 76b facing the bottom surface 76a, and four side surfaces 76c. The filter unit 22 is attached to one of the side surfaces 76c of the housing 76. The introduction port 20, the first switching valve 24, the discharge port 32, the residual pressure exhaust valve 58, the second pressure gauge 60, an operating part of the first time delay valve 64, and an operating part of the second time delay valve 66 are attached to the top surface 76b of the housing 76. Note that the operating part of the first time delay valve 64 is a member that adjusts the opening degree of the first throttle valve 72, and the operating part of the second time delay valve 66 is a member that adjusts the opening degree of the second throttle valve 72A.

Further, as shown in FIG. 2B, the pressure booster valve 48, the pressure accumulator tank 50, the spring check valve 56, the second switching valve 52, the third switching valve 68, the spring check valve 56, and the first check valve 46 are accommodated in the housing 76. This housing 76 enhances the portability and operability of the pressure supply unit 16.

As shown in FIG. 1, the mist supply unit 18 is connected to the downstream side of the discharge port 32 of the pressure supply unit 16. The mist supply unit 18 of the present embodiment is constituted by a lubricator. The lubricator is a device that mixes mist of lubricating oil into compressed air, but in the present embodiment, the lubricator is filled with an inspection liquid containing a coloring agent or a fluorescent agent instead of the lubricating oil. The lubricator includes a Venturi tube in the interior thereof, and sucks out the inspection liquid by a negative pressure generated when the compressed air passes through the Venturi tube to mix the inspection liquid in a mist form with the compressed air.

The inspection liquid supply device 10 of the present embodiment is configured as described above. Hereinafter, a method of using the inspection liquid supply device 10 and the operation thereof will be described.

### (Case of Receiving Air Supply from Factory)

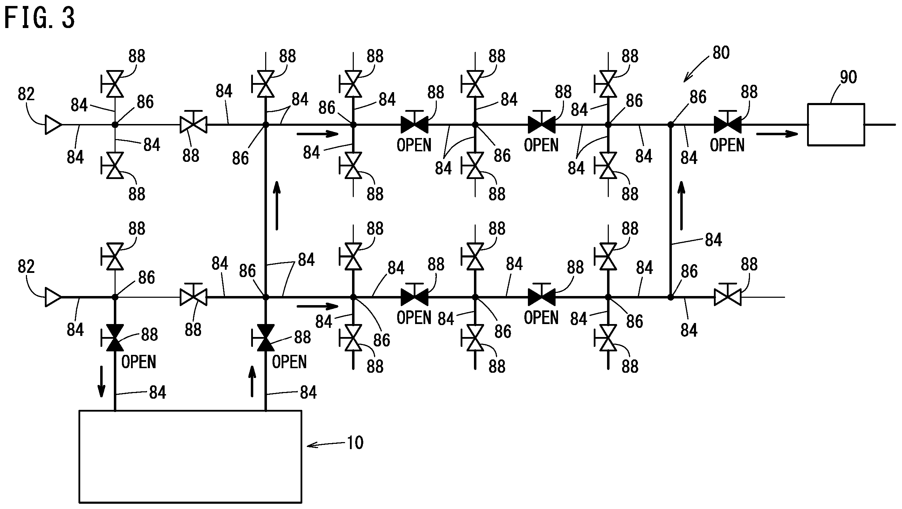

In this case, the inspection liquid supply device 10 is connected to a piping system 80 as shown in FIG. 3, for example, and is used for a leak inspection of the piping system 80. The inspection liquid supply device 10 operates by receiving supply of compressed air from an air supply system 82 of a factory or the like. The air supply system 82 supplies clean compressed air, from which dust and moisture have been removed, to the inspection liquid supply device 10. Therefore, in this case, as shown in FIG. 4, the filter unit 22 (see FIG. 1) is removed from the inspection liquid supply device 10.

Note that the piping system 80 in FIG. 3 includes a plurality of coupling portions 86 where pipes 84 are connected. Further, shut-off valves 88 are provided in respective parts of the piping system 80. Note that, although not shown, the coupling portions 86 are provided not only at a connection of the pipes 84 but also at a connection where the shut-off valve 88 and the pipe 84 are connected to each other. The coupling portions 86 include a connection section such as a threaded fitting, and a connection section formed by welding, brazing, or the like. In the piping system 80, compressed air leaks due to, for example, looseness of the coupling portions 86 and the connection where the shut-off valve 88 or the like is connected. Further, in the piping system 80, for example, compressed air may leak due to deterioration of the pipes 84 or the coupling portions 86. In order to detect such leakage of compressed air, a periodic leak inspection is required.

In the piping system 80, some of the shut-off valves 88 are opened in order to supply compressed air containing an inspection liquid to the pipe 84 to be inspected. The shut-off valves 88 depicted in black in the figure indicate that they are opened. Further, a second filter 90 is attached to the downstream side of the piping system 80. The second filter 90 separates the inspection liquid in a mist form from the compressed air to prevent the inspection liquid from scattering to the outside.

### (Direct Pressure Operation)

An operation (direct pressure operation) of the inspection liquid supply device 10 performed in the piping system 80 described above in the case where no compressed air remains inside the pipe 84 to be inspected will be described. In this case, the first switching valve 24 of the inspection liquid supply device 10 is switched to the direct pressure position in FIG. 4 by the manual operation of an operator. At the direct pressure position, the first switching valve 24 allows the introduction flow path 34 and the first flow path 26 to communicate with each other, and allows the second flow path 28 and the first exhaust portion 44a to communicate with each other. Note that, in the direct pressure operation, the fourth end portion 28b of the second flow path 28 is closed by the second switching valve 52.

Compressed air that has flowed in from the introduction port 20 flows into the first flow path 26 via the introduction flow path 34. The compressed air flows out of the discharge port 32 through the first check valve 46 of the first flow path 26. The compressed air that has flowed out of the discharge port 32 passes through the mist supply unit 18. At this time, the mist supply unit 18 adds mist of an inspection liquid to the compressed air. In this manner, the inspection liquid supply device 10 supplies the compressed air to the piping system 80 through the first flow path 26 of the pressure supply unit 16 as it is without boosting the pressure of the compressed air. In this case, the pressure supply unit 16 can supply the compressed air to the piping system 80 at a sufficient flow rate.

### (Pressure Boosting Operation)

Depending on the piping system 80 of the factory, it may be required to perform a leak inspection in a state where compressed air remains inside the pipe 84. Therefore, an operation (pressure boosting operation) of the inspection liquid supply device 10 performed in the case where compressed air remains inside the pipe 84 to be inspected will be described.

In the pressure boosting operation, the first switching valve 24 of the inspection liquid supply device 10 is switched to the pressure boosting position in FIG. 5 by the manual operation of the operator. At the pressure boosting position, the first switching valve 24 allows the introduction flow path 34 to communicate with the second flow path 28, and allows the second exhaust portion 44b to communicate with the first flow path 26. Note that the first check valve 46 prevents the compressed air from flowing back to the first flow path 26.

Compressed air that has flowed in from the introduction port 20 flows into the second flow path 28 via the introduction flow path 34. A portion of the compressed air is boosted in pressure by the pressure booster valve 48. The compressed air whose pressure has been boosted by the pressure booster valve 48 is stored in the pressure accumulator tank 50. The compressed air whose pressure has been boosted is continuously stored in the pressure accumulator tank 50 while the second switching valve 52 is located at the OFF position.

A portion of the compressed air that has flowed into the second flow path 28 flows into the pilot flow path 62. During the OFF period, the pilot flow path 62 is closed by the first time delay valve 64. Note that a portion of the compressed air in the pilot flow path 62 flows into the first control port 64c of the first time delay valve 64 via the third switching valve 68 as the driving air for the first time delay valve 64. The pressure of the driving air in the first time delay valve 64 gradually increases.

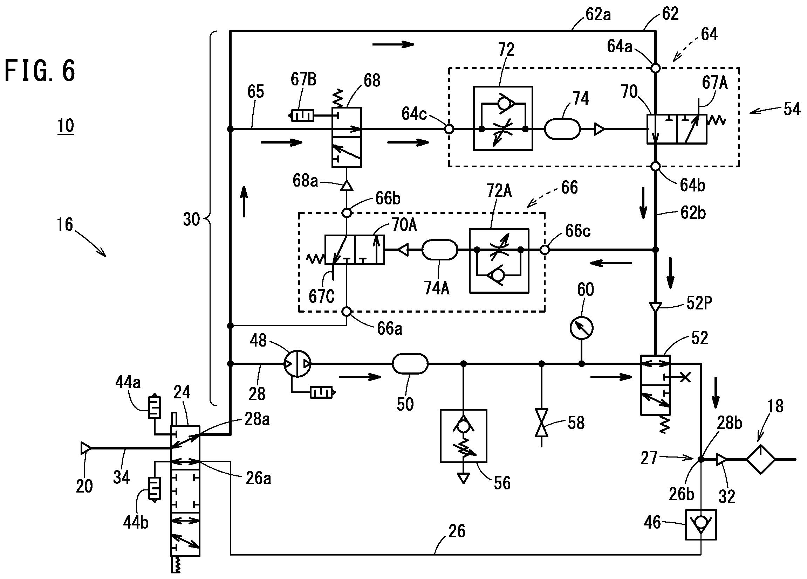

As shown in FIG. 6, when the first delay time set by the first throttle valve 72 elapses, the first time delay valve 64 is switched to the open position, and allows the first portion 62a and the second portion 62b of the pilot flow path 62 to communicate with each other. Thus, pilot air is supplied to the second switching valve 52, and the second switching valve 52 is switched to the ON position. As a result, the period is shifted to the ON period during which the compressed air stored in the pressure accumulator tank 50 is discharged from the discharge port 32. During the ON period, the mist supply unit 18 supplies the inspection liquid in a mist form to the compressed air discharged from the discharge port 32.

A portion of the pilot air in the second portion 62b of the pilot flow path 62 flows into the second control port 66c of the second time delay valve 66 as the driving air. During the ON period, the pressure of the driving air in the second time delay valve 66 gradually increases.

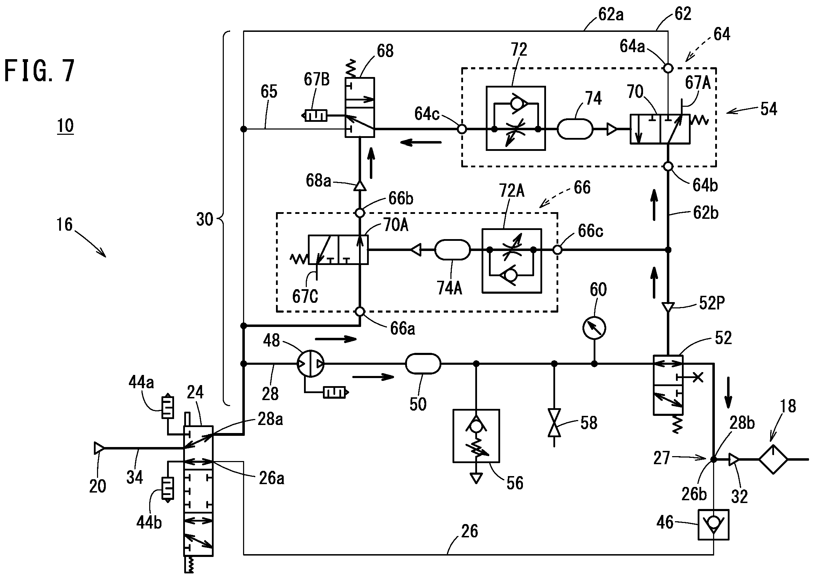

As shown in FIG. 7, the fifth switching valve 70A of the second time delay valve 66 is switched to the open position when the second delay time set by the second throttle valve 72A elapses after the ON period has started. As a result, the second time delay valve 66 causes the driving air to be supplied to the third switching valve 68 from the first portion 62a of the pilot flow path 62. The third switching valve 68 is switched to the second position. The driving air in the first time delay valve 64 is exhausted from the fourth exhaust portion 67B, and the fourth switching valve 70 returns to the closed position.

When the fourth switching valve 70 returns to the closed position, the pilot air in the second switching valve 52 is exhausted. Further, the driving air in the second time delay valve 66 is released as the pilot air in the second portion 62b is discharged.

As a result, as shown in FIG. 5, the second switching valve 52 is switched to the OFF position. The second switching valve 52 stops the release of the compressed air from the pressure accumulator tank 50, and the period is shifted to the OFF period. Further, the fifth switching valve 70A returns to the initial position. When the fifth switching valve 70A returns to the initial position, the driving air in the third switching valve 68 is exhausted from the fifth exhaust portion 67C, and the third switching valve 68 returns to the first position. Thereafter, the driving air is supplied to the first time delay valve 64 through the third switching valve 68.

Subsequently, the timer circuit 54 repeats the operation described with reference to FIGS. 5 to 7, whereby the inspection liquid supply device 10 intermittently supplies the compressed air and the inspection liquid in a mist form to the piping system 80. In this manner, by intermittently supplying the compressed air, it is possible to store the compressed air having sufficient pressure and volume in the pressure accumulator tank 50, and to supply the compressed air whose pressure has been boosted to the piping system 80 at a sufficient flow rate. Further, since the inspection liquid supply device 10 can perform the pressure boosting operation without receiving the supply of electric power, the leak inspection can be performed even in a place where it is difficult to secure a power supply.

### (Case of not Receiving Air Supply from Factory)

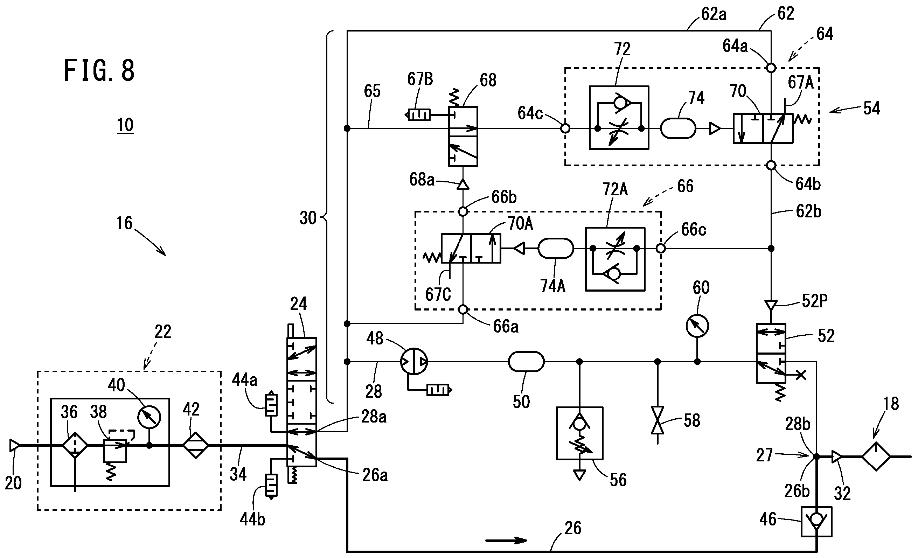

There are cases where supply of clean compressed air cannot be received from a factory. In this case, as shown in FIG. 8, the filter unit 22 is attached to the introduction flow path 34 between the introduction port 20 and the first switching valve 24. Further, a small air compressor (not shown) is connected to the introduction port 20. The first switching valve 24 is switched to the direct pressure position by the operation of the user.

Next, compressed air compressed by the small air compressor flows in from the introduction port 20. The compressed air compressed by the small air compressor contains dust and dew condensation moisture (a liquid phase component). The filter unit 22 can supply clean compressed air by removing the dust and the moisture contained in the compressed air.

The compressed air that has passed through the filter unit 22 passes through the pressure supply unit 16 via the first switching valve 24 and the first flow path 26, and is guided to the mist supply unit 18. The mist supply unit 18 adds an inspection liquid in a mist form to the compressed air passing therethrough, and supplies the compressed air containing the inspection liquid to the inspection target (for example, the piping system 80 in FIG. 3). In this manner, the inspection liquid supply device 10 of the present embodiment can supply the inspection liquid in a mist form to the inspection target even in the case where the supply of the compressed air cannot be received from the factory.

It should be noted that the present invention is not limited to the above disclosure, and various modifications are possible without departing from the essence and gist of the present invention.

The following supplementary notes are further disclosed in relation to the above-described disclosure.

### (Supplementary Note 1)

An aspect of the disclosure is characterized by the inspection liquid supply device (10) including: the introduction port (20) from which compressed air is introduced; the discharge port (32) from which the compressed air flows out; the first flow path (26) configured to communicate with the discharge port; the second flow path (28) that is provided in parallel with the first flow path, is configured to communicate with the discharge port, and includes the pressure booster valve (48) in the middle thereof; the first switching valve (24) configured to connect one of the first flow path or the second flow path to the introduction port; and the mist supply unit (18) configured to supply the inspection liquid in a mist form to the compressed air discharged from the discharge port. According to this inspection liquid supply device, in the case where the compressed air remains inside the inspection target, the inspection liquid in the mist form can be supplied to the inside of the inspection target by boosting the pressure of the compressed air through the second flow path and the pressure booster valve. In addition, according to the inspection liquid supply device, in the case where no compressed air remains inside the inspection target, the inspection liquid in the mist form can be supplied to the inside of the inspection target through the first flow path.

### (Supplementary Note 2)

The inspection liquid supply device according to Supplementary Note 1 may further include the pressure accumulator tank (50) connected to the downstream side of the pressure booster valve; the second switching valve (52) connected to the downstream side of the pressure accumulator tank, and configured to close the second flow path when located at the OFF position and allow the second flow path to communicate with the discharge port when located at the ON position; and the timer circuit (54) configured to take in the pilot air for the second switching valve from the second flow path upstream of the pressure booster valve, supply the pilot air to the second switching valve during the ON period, and discharge the pilot air in the second switching valve during the OFF period. By intermittently releasing the compressed air whose pressure has been boosted by the pressure booster valve while storing the compressed air in the pressure accumulator tank, this inspection liquid supply device can supply the compressed air to the inspection target at a sufficient flow rate and stabilize the supply of the inspection liquid in the mist form.

### (Supplementary Note 3)

In the inspection liquid supply device according to Supplementary Note 2, the timer circuit may include the pilot flow path (62) that branches off from the second flow path and is configured to supply the pilot air to the second switching valve; the first time delay valve (64) provided in the pilot flow path and configured to adjust the OFF period, and the second time delay valve (66) configured to be driven by the pilot air supplied from the first time delay valve and adjust the ON period. According to this inspection liquid supply device, the ON period during which the compressed air stored in the pressure accumulator tank is released and the OFF period during which the compressed air is stored in the pressure accumulator tank can be easily adjusted.

### (Supplementary Note 4)

The inspection liquid supply device according to Supplementary Note 3 may further include the housing (76) having a box shape and configured to accommodate the first switching valve, the pressure booster valve, the pressure accumulator tank, the first time delay valve, and the second time delay valve, wherein the inspection liquid supply device may include, on one surface thereof, the operating part of the first switching valve, the operating part of the first time delay valve, the operating part of the second time delay valve, the introduction port, and the discharge port. This inspection liquid supply device is excellent in portability and operability.

### (Supplementary Note 5)

The inspection liquid supply device according to any one of Supplementary Notes 1 to 4 may further include the first filter (36) configured to remove dust, and the dryer (42) configured to remove the liquid phase component contained in the compressed air, the first filter and the dryer being provided between the introduction port and the first switching valve. According to this inspection liquid supply device, compressed air supplied from a small air compressor can be used for the leak inspection.

### REFERENCE SIGNS LIST

10: inspection liquid supply device
16: pressure supply unit
18: mist supply unit
20: introduction port
24: first switching valve
26: first flow path
28: second flow path
32: discharge port
36: first filter
42: dryer
46: first check valve
48: pressure booster valve
50: pressure accumulator tank
52: second switching valve
54: timer circuit
62: pilot flow path
64: first time delay valve
66: second time delay valve

## Claims

1. An inspection liquid supply device (10) comprising:
an introduction port (20) from which compressed air is introduced;
a discharge port (32) from which the compressed air flows out;
a first flow path (26) configured to communicate with the discharge port;
a second flow path (28) that is provided in parallel with the first flow path, is configured to communicate with the discharge port, and includes a pressure booster valve (48) in a middle of the second flow path;
a first switching valve (24) configured to connect one of the first flow path or the second flow path to the introduction port; and
a mist supply unit (18) configured to supply an inspection liquid in a mist form to the compressed air discharged from the discharge port.

2. The inspection liquid supply device according to claim 1, further comprising:
a pressure accumulator tank (50) connected to a downstream side of the pressure booster valve;
a second switching valve (52) connected to a downstream side of the pressure accumulator tank, and configured to close the second flow path when located at an OFF position and allow the second flow path to communicate with the discharge port when located at an ON position; and
a timer circuit (54) configured to take in pilot air for the second switching valve from the second flow path upstream of the pressure booster valve, supply the pilot air to the second switching valve during an ON period, and discharge the pilot air in the second switching valve during an OFF period.

3. The inspection liquid supply device according to claim 2, wherein the timer circuit includes:
a pilot flow path (62) that branches off from the second flow path and is configured to supply the pilot air to the second switching valve;
a first time delay valve (64) provided in the pilot flow path and configured to adjust the OFF period; and
a second time delay valve (66) configured to be driven by the pilot air supplied from the first time delay valve and adjust the ON period.

4. The inspection liquid supply device according to claim 3, further comprising a housing (76) having a box shape and configured to accommodate the first switching valve, the pressure booster valve, the pressure accumulator tank, the first time delay valve, and the second time delay valve, wherein the inspection liquid supply device includes, on one surface of the housing, an operating part of the first switching valve, an operating part of the first time delay valve, an operating part of the second time delay valve, the introduction port, and the discharge port.

5. The inspection liquid supply device according to any one of claims 1 to 4, further comprising a first filter (36) configured to remove dust, and a dryer (42) configured to remove a liquid phase component contained in the compressed air, the first filter and the dryer being provided between the introduction port and the first switching valve.
